# EUROPÄISCHE PATENTSCHRIFT

(11) **EP 3 098 470 B1**
(45) Veröffentlichungstag und Bekanntmachung des Hinweises auf die Patenterteilung: **24.11.2021**
(21) Anmeldenummer: 16166790.2
(22) Anmeldetag: 25.04.2016
(51) Int. Cl.: F16D 13/71

(54) **KRAFTFAHRZEUGANTRIEBSSTRANG MIT ZUZUDRÜCKENDER EINFACHKUPPLUNG**
VEHICULAR DRIVE TRAIN PROVIDED WITH PRESS-SHUT SIMPLE COUPLING
ENTRAINEMENT D'UN VEHICULE AUTOMOBILE COMPRENANT UN EMBRAYAGE SIMPLE SE FERMANT EN SERRANT

(30) Priorität: 28.05.2015 DE 102015209805
(43) Veröffentlichungstag der Anmeldung: 30.11.2016
(73) Patentinhaber: Schaeffler Technologies AG & Co. KG, 91074 Herzogenaurach (DE)
(72) Erfinder: Daikeler, René, 77880 Sasbach (DE); Krebs, Florian, 77815 Bühl (DE); Gullasch, Jens, 76149 Karlsruhe (DE); Hoppe, Marcus, 77855 Achern (DE); Baumann, Michael, 77886 Lauf (DE)

(56) Entgegenhaltungen:
- EP-A1- 1 589 248
- EP-A1- 1 881 220
- CN-A- 103 711 806
- FR-A1- 2 950 120
- FR-A1- 2 956 172
- GB-A- 830 428

## Beschreibung

Die Erfindung betrifft einen Kraftfahrzeugantriebsstrang, mit einem Antriebsaggregat und einem Getriebe sowie einer dazwischengeschalteten Kupplung, für ein bspw. elektromotorisch und/oder verbrennungsmotorisch angetriebenes Kraftfahrzeug, wie einen Pkw, einen Lkw oder ein anderes Nutzfahrzeug.

Aus dem Stand der Technik sind bereits Kraftfahrzeugantriebsstränge bekannt, die Doppelkupplungen einsetzen. Dies sind die üblichen modernen Kupplungen, von denen ausgehend eine Weiterentwicklung betrieben wird. Natürlich sind auch Einfachkupplungen bekannt, wie etwa aus der DE 10 2014 216 277 A1. Dort ist bspw. eine Reibungskupplungseinrichtung, insbesondere für einen Antriebsstrang eines verbrennungskraftmaschinengetriebenen Kraftahrzeuges bekannt, aufweisend eine Drehachse, wenigstens eine Druckplatte, wenigstens eine zu einer Betätigung zwischen einer Schließposition und einer Öffnungsposition relativ zu der Druckplatte axial verlagerbare Anpressplatte und eine Federeinrichtung mit einer ersten Feder mit Federzungen und Federfenstern und einer zweiten Feder mit einem Ringabschnitt und Hakenabschnitten, wobei die Hakenabschnitte durch die Federfenster hindurch ragen, bei der die Hakenabschnitte jeweils einen Zentrierabschnitt und einen Rücksprungabschnitt aufweisen, und die Reibungskupplungseinrichtung baulich und/oder funktional verbessern.

Aus der FR 2 950 120 A1 ist ferner eine Doppelkupplung in Dreiplattenbauweise bekannt. Die gemeinsame Zentralplatte beider Teilkupplungen stützt sich auf der inneren Getriebeeingangswelle ab, die über die motorseitige Teilkupplung mit dem Antriebsmotor gekoppelt wird.

Bekannt sind ferner aufgedrückte Kupplungskonzepte für automatisierte und/oder hybridisierte Schaltgetriebe, die auch als "normally closed" Kupplungen bezeichnet werden. Dies ist das übliche Konzept für Kraftfahrzeugkupplungen im Antriebstrang des Fahrzeugs.

Bisherige automatisierte Schaltgetriebe basieren auf Handschaltgetrieben mit aufgedrückten ("normally closed") Kupplungen, bei denen die Kupplungen an einem Schwungrad oder Zweimassenschwungrad befestigt werden, welches mit der Kurbelwelle des Motors verbunden ist. Erst nachdem diese Bauteile montiert sind, können der Motor und das Getriebe miteinander verbunden werden und die Einheit als System getestet werden. Eine entsprechende Einfachkupplung ist aus der EP 1 881 220 A1 bekannt.

Einfachkupplungen in normally open Bauweise sind z.B. bekannt aus der CN 103 711 806 A, FR 2 956 172 A1 und GB 830 428 A.

Aus der EP 1 589 248 A1 ist andererseits auch eine zugedrückte ("normally open") Kupplung für ein Automatikgetriebe bekannt. Auch bei dieser Kupplung ist vorgesehen, dass sie am Schwungrad oder Zweimassenschwungsrad befestigt ist, welches mit der Kurbelwelle des Motors verbunden ist. Hier erfolgt ein Test des Gesamtsystems nach dem Zusammenbau, wobei die Betätigungskräfte dann auf das Kurbelwellenhauptlager wirken.

Dies ist jedoch relativ aufwändig für den Prüfbetrieb, weshalb hier eine Verbesserung erreicht werden soll. Es sollen insbesondere die Nachteile aus dem Stand der Technik behoben werden und sicherere Kraftfahrzeugantriebsstränge realisierbar sein.

Diese Aufgabe wird bei einer gattungsgemäßen Vorrichtung gemäßen den Merkmalen des Anspruchs 1 gelöst. Erfindungsgemäß ist vorgesehen, dass die Kupplung als zum Drehmomentübertragen zuzudrückende ("normally open") Einfachkupplung ausgebildet ist, also als Einfachkupplung, die nur eine Kupplung aufweist, statt zwei koaxialer Kupplungen, wie es bei Doppelkupplungen sonst der Fall ist. Auch soll ein gänzlich anderes Konzept genutzt werden, das bei Kraftfahrzeugantriebssträngen unbekannt ist.

Für den sicherheitstechnischen Aspekt ist es von Vorteil, wenn der Kraftfahrzeugantriebsstrang ein Kupplungskonzept ermöglicht, mit einer Einfachkupplung, die ein zugedrücktes System realisiert. Dadurch ist es möglich, die Getriebe- und Kupplungsfunktionen gemeinsam als Einheit im Getriebe vor dem Zusammenbau mit dem Motor, etwa einer Verbrennungskraftmaschine oder einem Elektromotor, an der so genannten "End of Line" zu prüfen.

Vorteilhafte Ausführungsformen sind in den Unteransprüchen beansprucht und werden nachfolgend näher erläutert.

Erfindungsgemäß ist vorgesehen, dass die Kupplung über zumindest ein Stützlager, wie ein Wälzlager oder ein Gleitlager, axial positionsbestimmt auf einer Getriebeeingangswelle gelagert ist. Bei solchen Konzepten wird die zugedrückte ("normally o-pen") Kupplung über ein Stützlager auf der Getriebewelle gelagert, wodurch sie zum Teil das Getriebe führt. Dadurch wird das Prüfen vor Kombination mit dem Motor erleichtert.

Es ist auch erfindungsgemäß vorgesehen, dass ein Kupplungsaktor auf die Kupplung einwirkt, der eine Übersetzung in Form einer hydraulischen oder einer mechanischen Übersetzung beinhaltet. Es kann dabei ein (direkt gedrückter) Aktor mit einem Übersetzungsverhältnis von Anpresskraft zu Einrückkraft von ca. 1 eingesetzt sein. In nicht beanspruchten Alternativen kann auch ein Aktor mit einem Übersetzungsverhältnis von Anpresskraft zu Einrückkraft von größer (oder kleiner) 1 eingesetzt sein. Ein für den jeweiligen Anwendungsfall optimierter Kraftfahrzeugantriebsstrang lässt sich dann realisieren. Dies kann auch auf der Kupplungsseite entsprechend umgesetzt werden.

Wenn der Kupplungsaktor mit einem hebelartigen Blechbauteil, einer Hebelfeder und/oder einem Einzelhebel in radialer oder tangentialer Anordnung zum Erreichen des jeweiligen Übersetzungsverhältnisses in Wirkzusammenhang steht, wird die Auslegung des Kraftfahrzeugantriebsstrangs erleichtert.

Es ist auch von Vorteil, wenn eine Verschleißnachstelleinrichtung integriert ist, die so ausgebildet ist, dass sie kraft- oder weggesteuert einen im Betrieb der Kupplung auftretenden Verschleiß kompensiert. Ein während des Betriebes andauernd komfortorientiertes Verhalten und verschleißausgleichendes, insbesondere geräuscharmes und klapperfreies Nutzen wird ermöglicht.

Ein vorteilhaftes Ausführungsbeispiel ist auch dadurch gekennzeichnet, dass der Kupplungsaktor als zentraler Kupplungseinrücker (Concentric-Slave-Cylinder, d.h. CSC) oder als geführtes Einrücksystem ausgebildet ist.

Für einen effizienten Betrieb ist es von Vorteil, wenn der Kupplungsaktor einen Hebelaktor, einen hydrostatischen Aktor (HCA; Hydrostatic Clutch Actuator) und/oder ein "Powerpack" einsetzt.

Der Einsatzbereich wird erweitert, wenn das Getriebe als automatisches Schaltgetriebe (ASG, etwa mit Hybridfunktion) oder manuelles Handschaltgetriebe ausgebildet ist. Besonders im letztgenannten Fall werden die Kosten reduziert.

Um ein gutes Drehmomentübertragungsverhalten zu erreichen, ist es von Vorteil, wenn die Kupplung als Einscheibenkupplung oder Lamellenkupplung ausgebildet ist. Im erstgenannten Fall wird eine besonders kompakte Bauart erreicht.

Um den Verschleiß gering zu halten, ist es von Vorteil, wenn die Kupplung als nasse Kupplung eingesetzt / ausgebildet ist, wohingegen das Gewicht reduzierbar und die Kosten senkbar sind, wenn die Kupplung als trockene Kupplung ausgebildet ist.

Mit anderen Worten handelt es sich bei der vorliegenden Erfindung explizit um eine Einfachkupplung, welche zugedrückt werden soll. Dieses kann gegenüber dem Stand der Technik Vorteile bei der Ausfallsicherung haben. Ein Vorteil des beschriebenen Systems ist auch der Aufbau auf der Getriebeeingangsglocke, welches ein prüfbares System ohne Motor darstellt. Es werden generell unterschiedliche Lagerungsmöglichkeiten, etwa auf der Kurbelwelle, der Getriebeeingangswelle, oder der Kupplungsglocke, sowie unterschiedliche Möglichkeiten der Krafteinleitung, der Verschleißnachstellung, des möglichen Ausrücksystems und der möglichen Aktorik vorgeschlagen, die untereinander kombiniert werden können. Die einzelnen Aspekte können auch in Teilanmeldungen weiter verfolgt werden.

Die Erfindung wird nachfolgend mit Hilfe einer Figur näher erläutert. Es zeigen:
- Fig. 1: eine nur teilweise dargestellte erste Ausführungsform einer nicht erfindungsgemäßen Kraftfahrzeugantriebsstrangausgestaltung im Längsschnitt,
- Fig. 2: eine zweite nicht erfindungsgemäße Ausführungsform eines Kraftfahrzeugantriebsstrangs in einer zur Fig. 1 vergleichbaren Darstellungsweise,
- Fig. 3: eine dritte Ausführungsform eines nicht erfindungsgemäßen Kraftfahrzeugantriebsstranges in einer zur Fig. 1 vergleichbaren Darstellungsweise,
- Fig. 4: eine vierte Ausführungsform eines nicht erfindungsgemäßen Kraftfahrzeugantriebsstrangs in einer zur Fig. 1 vergleichbaren Darstellungsweise,
- Fig. 5: eine fünfte Ausführungsform eines nicht erfindungsgemäßen Kraftfahrzeugantriebsstrangs in einer zur Fig. 1 vergleichbaren Darstellungsweise,
- Fig. 6: eine sechste Ausführungsform eines nicht erfindungsgemäßen Kraftfahrzeugantriebsstrangs in einer zur Fig. 1 vergleichbaren Darstellungsweise, und
- Fig. 7: eine Ausführungsform eines erfindungsgemäßen Kraftfahrzeugantriebsstrangs in einer zur Fig. 1 vergleichbaren Darstellungsweise.

Die Figuren sind lediglich schematischer Natur und dienen nur dem Verständnis der Erfindung. Die gleichen Elemente sind mit denselben Bezugszeichen versehen. Einzelne Merkmale der Ausführungsbeispiele können untereinander ausgetauscht werden.

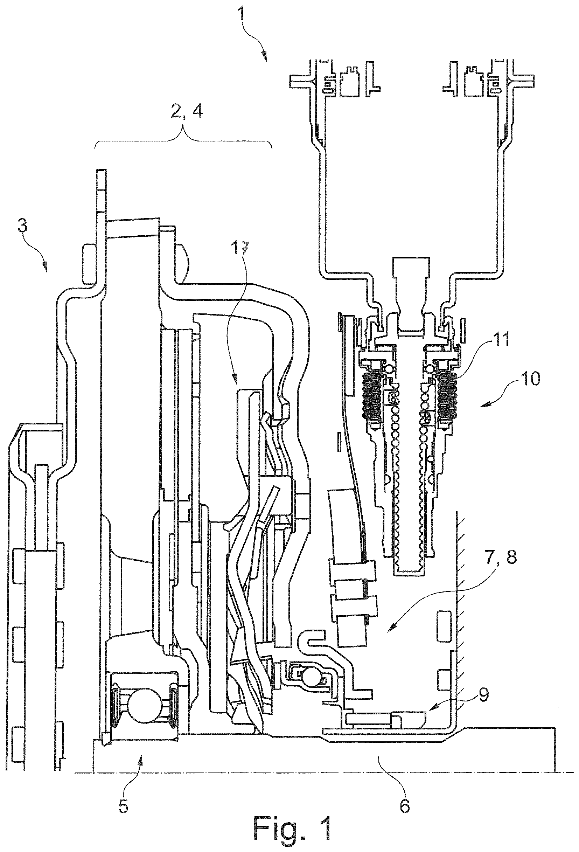

In Fig. 1 ist ein Kraftfahrzeugantriebsstrang 1 dargestellt. Er wirkt mit einem nicht dargestellten Antriebsaggregat zusammen und ist zum Weiterleiten, im eingekuppelten, also zugedrückten Zustand, an ein nicht dargestelltes Getriebe vorgesehen. Der Kraftfahrzeugantriebsstrang 1 weist eine Kupplung 2 auf, die benachbart zu einem Drehmomenteinleitorgan 3 angeordnet ist. Die Kupplung 2 ist als Einfachkupplung 4 ausgebildet, eben gerade nicht als Doppelkupplung, sie enthält also keine zwei konzentrisch zueinander angeordneten Kupplungen. Die Einfachkupplung 4 ist als zuzudrückende Kupplung 2, nämlich als "normally open"-Kupplung ausgebildet.

Die Einfachkupplung 4 stützt sich über ein Stützlager 5 auf einer Getriebeeingangswelle 6 ab. Jenes Stützlager 5 ist ein Schrägkugellager.

Es ist ein Kupplungsaktor 7 eingesetzt, wobei in diesem Ausführungsbeispiel der Kupplungsaktor 7 als Stellteil 8 agiert. In Verbindung mit der dargestellten hebelübersetzten Kupplung wird so ein Übersetzungsverhältnis i<1 von Einrückkraft (ERK) zu Anpresskraft (APK) erreicht.

Es ist eine Verschleißnachstellung 18 realisiert, die aber auch weglassbar ist. Es wird ein geführtes Einrücksystem 9 eingesetzt. Es wird ferner ein Hebelaktor 10 eingesetzt, der einen Faltenbalg 11 nutzt.

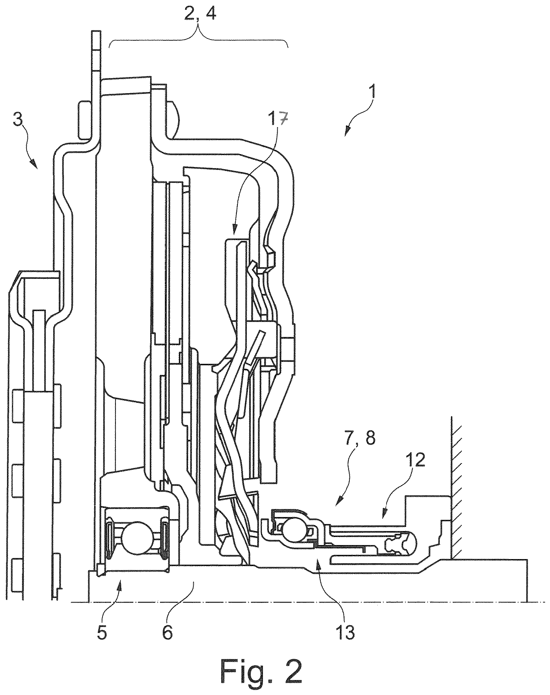

In Fig. 2 ist ein zweites Ausführungsbeispiel eines erfindungsgemäßen Kraftfahrzeugantriebsstrangs 1 im Ausschnitt dargestellt, wobei die Kupplung 2 wiederum als Einfachkupplung ausgebildet ist. Anders als in dem ersten Ausführungsbeispiel ist jedoch statt eines geführten Einrücksystems ein zentraler Kupplungseinrücker (CSC) 12 eingesetzt. Zwar ist wiederum eine Verschleißnachstelleinrichtung 18 vorgesehen, aber auch weglassbar. Die Aktorik setzt auf einen hydrostatischen Kupplungsaktor (HCA) 13 und ein nicht näher detailliertes "Powerpack".

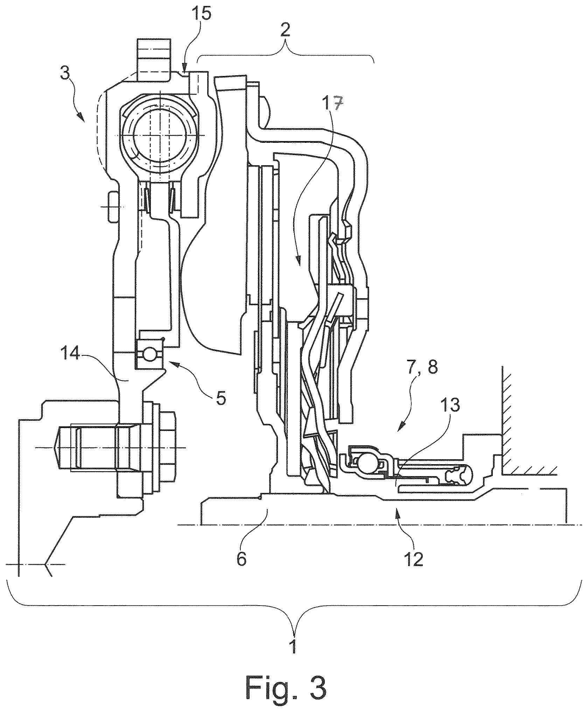

Dazu ähnlich, ist in dem dritten Ausführungsbeispiel gemäß Fig. 3 wiederum ein zentraler Kupplungseinrücker 12 in Verbindung mit einem hydrostatischem Kupplungsaktor 13 oder einem Powerpack eingesetzt. Statt eines an der Getriebeeingangswelle 6 angreifenden Stützlagers 5 wird ein abgewandeltes Wälzlager zwischen der Kupplung 2 und einem kurbelwellenfesten Bauteil 14 eingesetzt. Das kurbelwellenfeste Bauteil 14 ist mit einem Schwungrad 15 des Drehmomenteinleitorgans 3 verbunden oder mit diesem einteilig ausgeführt.

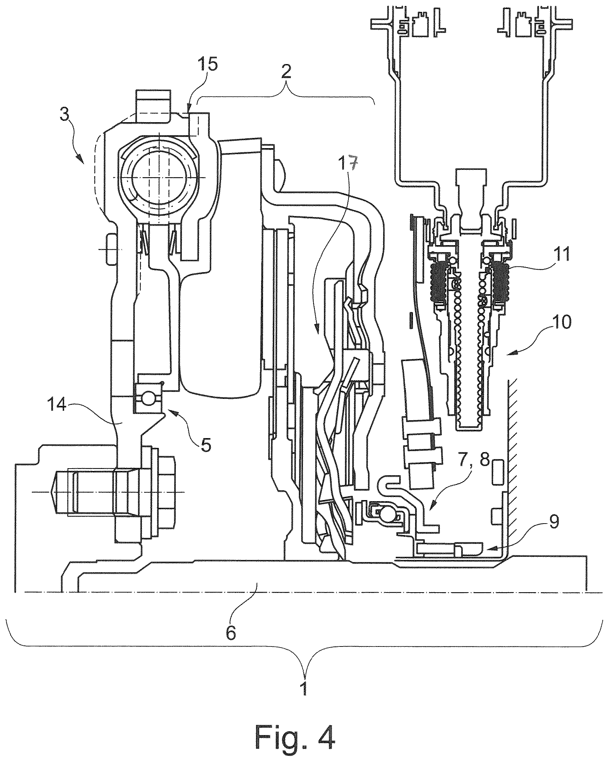

Das Ausgangsbeispiel gemäß Fig. 4 ist dem aus Fig. 3 ähnlich, doch wird eine ähnliche Aktorik wie in dem ersten Ausführungsbeispiel eingesetzt. Wie auch in dem dritten Ausführungsbeispiel, ist im vierten Ausführungsbeispiel keine Verschleißnachstelleinrichtung eingesetzt, aber einsetzbar.

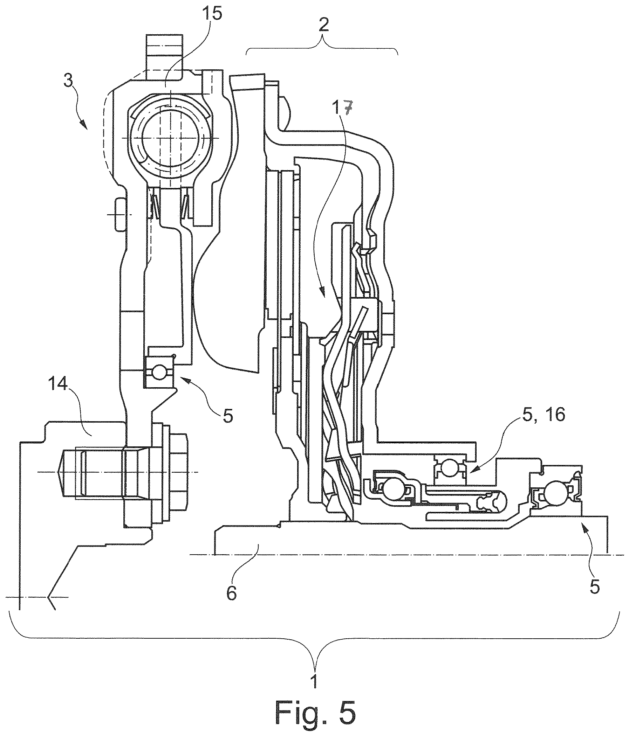

Anders als in den Ausführungsbeispielen der Fign. 1 bis 4, wird in dem Ausführungsbeispiel gemäß Fig. 5 ein weiteres Stützlager 5 am Kupplungsglockenboden eingesetzt, wobei jenes Stützlager auch als Deckellager 16 bezeichnet werden kann.

Die Umwandlung der Einrückkraft in Anpresskraft, eine Verschleißnachstellung und ein Betätigungs- bzw. Einrücksystem wie im zweiten Ausführungsbeispiel ist realisiert. Auch die Aktorik ist entsprechend.

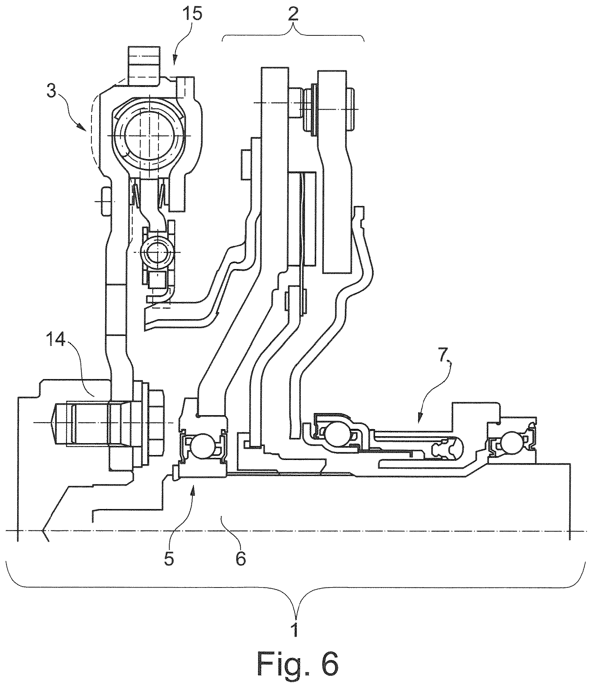

Das Ausführungsbeispiel gemäß Fig. 6 zeigt in Abwandlung des Ausführungsbeispiels gemäß Fig. 2 eine Anordnung mit einer direkt betätigten Kupplung. Ein Übersetzungsverhältnis von Anpresskraft zur Einrückkraft von ca. 1 wird realisiert.

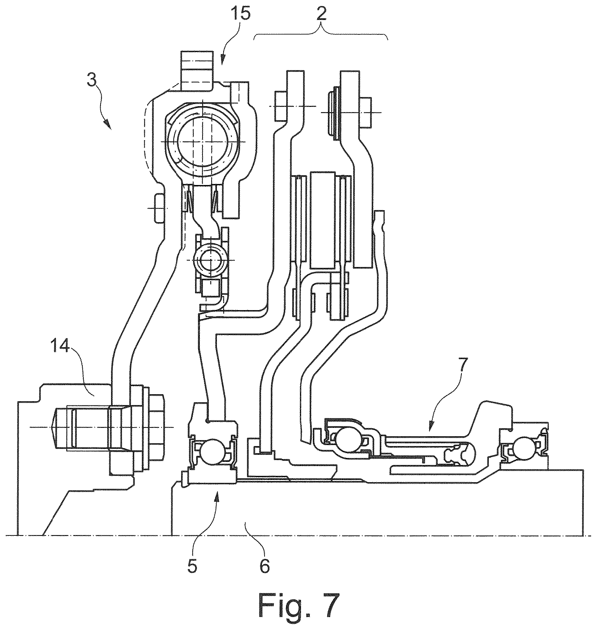

In diesem Ausführungsbeispiel und in dem Ausführungsbeispiel gemäß Fig. 7 ist vorzugsweise keine Verschleißnachstellung realisiert. In den Ausführungsbeispielen der Fign. 1 bis 5 ist jedoch eine Verschleißnachstellung durch Verwendung einer Verschleißnachstelleinrichtung 17 realisiert. Die erfindungsgemäßen Kraftfahrzeugantriebsstränge 1 können sowohl mit, also auch ohne Verschleißnachstelleinrichtung 17 realisiert werden.

Das Ausführungsbeispiel gemäß Fig. 7 entspricht dem Ausführungsbeispiel gemäß Fig. 6, doch ist auch dieses Ausführungsbeispiel, verglichen mit den ersten fünf Ausführungsbeispielen kostengünstiger, da ein Nachstellen über eine Hydraulik ermöglicht ist, also über längere Wege, und dadurch weniger Einrückbauteile enthält, also geringere Toleranzen nach sich zieht. Die beiden Varianten ermöglichen das Vermeiden von Rupfen und Klappern und weisen ein besseres Praxisverhalten und somit einen besseren Komfort auf.

### Bezugszeichenliste

- 1: Kraftfahrzeugantriebsstrang
- 2: Kupplung
- 3: Drehmomenteinleitorgan
- 4: Einfachkupplung
- 5: Stützlast
- 6: Getriebeeingangswelle
- 7: Kupplungsaktor
- 8: Stellteil
- 9: geführtes Einrücksystem
- 10: Hebelaktor
- 11: Faltenbalg
- 12: zentraler Kupplungseinrücker
- 13: HCA
- 14: kurbelwellenfestes Bauteil
- 15: Schwungrad
- 16: Deckellager
- 17: Verschleißnachstelleinrichtung

## Patentansprüche

1. Kraftfahrzeugantriebsstrang (1), mit einem Antriebsaggregat und einem Getriebe sowie einer dazwischengeschalteten Kupplung (2), wobei die Kupplung (2) als zum Drehmomentübertragen zuzudrückende ("normally open") Einfachkupplung (4) ausgebildet ist, **dadurch gekennzeichnet, dass** die Kupplung (2) über zumindest ein Stützlager (5) axial positionsbestimmt auf einer Getriebeeingangswelle (6) gelagert ist,
die Kupplung (2) über eine Druckplatte auf dem Stützlager (5) gelagert ist, die Druckplatte radial außen einen Reibbereich und radial innen einen Lagerbereich zur Abstützung der Kupplung (2) auf dem Stützlager (5) aufweist, und an der Druckplatte radial zwischen dem Reibbereich und dem Lagerbereich eine Verzahnung zur drehmoment übertragenden Verbindung der Kupplung (2) mit einem Drehmomenteinleitorgan (3) vorgesehen ist, und dass ein Kupplungsaktor (7) auf die Kupplung (2) einwirkt, der als direkt gedrückter Aktor mit einem Übersetzungsverhältnis von Anpresskraft zur Einrücckraft von ca. 1 ausgebildet ist.

2. Kraftfahrzeugantriebsstrang (1) nach Anspruch 1, **dadurch gekennzeichnet, dass** der Kupplungsaktor (7) mit einem hebelartigen Blechbauteil, einer Hebelfeder und/oder einem Einzelhebel in radialer oder tangentialer Anordnung zum Erreichen des jeweiligen Übersetzungsverhältnisses in Wirkzusammenhang steht.

3. Kraftfahrzeugantriebsstrang (1) nach einem der Ansprüche 1 oder 2, **dadurch gekennzeichnet, dass** eine Verschleißnachstelleinrichtung (17) integriert ist, die so ausgebildet ist, dass sie kraft- oder weggesteuert einen im Betrieb der Kupplung (2) auftretenden Verschleiß kompensiert.

4. Kraftfahrzeugantriebsstrang (1) nach Anspruch 2 oder 3, **dadurch gekennzeichnet, dass** der Kupplungsaktor (7) als zentraler Kupplungseinrücker (12) (CSC) oder als geführtes Einrücksystem (9) ausgebildet ist.

5. Kraftfahrzeugantriebsstrang (1) nach einem der Ansprüche 2 bis 4, **dadurch gekennzeichnet, dass** der Kupplungsaktor (7) einen Hebelaktor, einen hydrostatischen Aktor (HCA) (13) und/oder ein Powerpack einsetzt.

6. Kraftfahrzeugantriebsstrang (1) nach einem der Ansprüche 1 bis 5, **dadurch gekennzeichnet, dass** das Getriebe als automatisches Schaltgetriebe (ASG) oder manuelles Handschaltgetriebe ausgebildet ist.

7. Kraftfahrzeugantriebsstrang (1) nach einem der Ansprüche 1 bis 6, **dadurch gekennzeichnet, dass** die Kupplung (2) als Einscheibenkupplung oder Lamellenkupplung ausgebildet ist.

8. Kraftfahrzeugantriebsstrang (1) nach einem der Ansprüche 1 bis 7, **dadurch gekennzeichnet, dass** die Kupplung (2) als nasse oder trockene Kupplung ausgebildet ist.

## Claims

1. A vehicular drive train (1) having a drive unit and a transmission, as well as a clutch (2) connected therebetween, the clutch (2) being designed as a (normally open) single clutch (4) to be pressed shut for torque transmission, **characterised in that** the clutch (2) is mounted on a transmission input shaft (6) via at least one support bearing (5) in an axially position-determined manner,
the clutch (2) is mounted on the support bearing (5) via a pressure plate, the pressure plate has a friction region radially on the outside and a bearing region radially on the inside for supporting the clutch (2) on the support bearing (5), and a toothing is provided radially on the pressure plate between the friction region and the bearing region for the torquetransmitting connection of the clutch (2) to a torque input element (3), and **in that** a clutch actuator (7) acts on the clutch (2), which is designed as a directly pressed actuator with a transmission ratio of contact pressure to engagement force of approx. 1.

2. The vehicular drive train (1) according to claim 1, **characterised in that** the clutch actuator (7) is operatively connected to a lever-like sheet metal component, a lever spring and/or an individual lever in a radial or tangential arrangement in order to achieve the respective transmission ratio.

3. The vehicular drive train (1) according to one of claims 1 or 2, **characterised in that** a wear adjustment device (17) is integrated, which is designed in such a way that it compensates for wear occurring during operation of the clutch (2) in a force-controlled or displacement-controlled manner.

4. The vehicular drive train (1) according to claim 2 or 3, **characterised in that** the clutch actuator (7) is designed as a central clutch engagement device (12) (CSC) or as a guided engagement system (9).

5. The vehicular drive train (1) according to one of claims 2 to 4, **characterised in that** the clutch actuator (7) uses a lever actuator, a hydrostatic actuator (HCA) (13) and/or a power pack.

6. The vehicular drive train (1) according to one of claims 1 to 5, **characterised in that** the transmission is designed as an automatic transmission (ASG) or as a manual transmission.

7. The vehicular drive train (1) according to one of claims 1 to 6, **characterised in that** the clutch (2) is designed as a single-disc clutch or as a multi-disc clutch.

8. The vehicular drive train (1) according to one of claims 1 to 7, **characterised in that** the clutch (2) is designed as a wet or dry clutch.

## Revendications

1. Entraînement d'un véhicule automobile (1), comprenant un groupe moteur et une boîte de vitesse ainsi qu'un embrayage (2) entre ceux-ci, dans lequel l'embrayage (2) est conçu comme un embrayage simple (4) se fermant en serrant pour la transmission du couple (« normally open »), **caractérisé en ce que** l'embrayage (2) est disposé par le biais d'au moins un palier support (5) à position axiale définie sur un arbre d'entrée de la boîte de vitesse (6),
l'embrayage (2) est disposé par le biais d'une plaque de pression sur le palier support (5), la plaque de pression présente radialement vers l'extérieur une zone de friction et radialement vers l'intérieur une zone de palier pour le support de l'embrayage (2) sur le palier support (5) et sur la plaque de pression, radialement entre la zone de friction et la zone de palier, une denture est prévue pour une liaison à transmission du couple de l'embrayage (2) avec un organe d'introduction de couple (3) et **en ce qu'**un actionneur d'embrayage (7) agit sur l'embrayage (2), qui est conçu comme actionneur à pression avec un rapport de transmission de force de pression en force d'embrayage d'environ 1.

2. Entraînement d'un véhicule automobile (1) selon la revendication 1, **caractérisé en ce que** l'actionneur d'embrayage (7) est en relation opérationnelle avec une pièce de tôle en forme de levier, un ressort à levier et/ou un levier simple dans une disposition radiale ou tangentielle pour atteindre le rapport de transmission respectif.

3. Entraînement d'un véhicule automobile (1) selon l'une quelconque des revendications 1 ou 2, **caractérisé en ce qu'**un mécanisme de rattrapage d'usure (17) est intégré, qui est conçu de manière à compenser une usure se produisant pendant le fonctionnement de l'embrayage (2) via une commande de force ou de course.

4. Entraînement d'un véhicule automobile (1) selon la revendication 2 ou 3, **caractérisé en ce que** l'actionneur d'embrayage (7) est conçu comme un dispositif d'embrayage central (12) (CSC) ou comme un système d'embrayage guidé (9).

5. Entraînement d'un véhicule automobile (1) selon l'une quelconque des revendications 2 à 4, **caractérisé en ce que** l'actionneur d'embrayage (7) utilise un actionneur à levier, un actionneur hydrostatique (HCA) (13) et/ou un bloc d'alimentation.

6. Entraînement d'un véhicule automobile (1) selon l'une quelconque des revendications 1 à 5, **caractérisé en ce que** la boîte de vitesse est conçue comme une boîte de vitesse automatique (ASG) ou une boîte de vitesse manuelle.

7. Entraînement d'un véhicule automobile (1) selon l'une quelconque des revendications 1 à 6, **caractérisé en ce que** l'embrayage (2) est conçu comme un embrayage à un disque ou un embrayage à lamelles.

8. Entraînement d'un véhicule automobile (1) selon l'une quelconque des revendications 1 à 7, **caractérisé en ce que** l'embrayage (2) est conçu comme un embrayage humide ou sec.
